# EUROPEAN PATENT APPLICATION

(11) **EP 1 365 389 A2**
(43) Date of publication of application: **26.11.2003**
(21) Application number: 03253273.1
(22) Date of filing: 23.05.2003
(51) Int. Cl.: G11B 5/65

(54) **Perpendicular magnetic recording medium**

(30) Priority: 23.05.2002 JP 2002149408
(71) Applicant: Fuji Photo Film Co., Ltd., Kanagawa (JP)
(72) Inventor: Moriwaki, Kenichi, Odawara-shi, Kanagawa (JP); Usuki, Kazuyuki, Odawara-shi, Kanagawa (JP)
(74) Representative: Stevens, Jason Paul

(57) **Abstract**

A perpendicular magnetic recording medium comprising a substrate and a recording layer, the recording layer comprising a cobalt-containing ferromagnetic metal alloy (1,2,3) and a non-magnetic oxide.

## Description

### FIELD OF THE INVENTION

This invention relates to a magnetic recording medium used for digital information recording.

### BACKGROUND OF THE INVENTION

Recent popularization of the internet has diversified the use of personal computers, including processing large volumes of moving image or sound data. With this trend, the demand for magnetic recording media, such as hard disks, with increased memory capacity has ever been increasing.

In a hard disk drive, a magnetic disk is magnetized (recorded) with a magnetic head which flies from the magnetic disk by several nanometers on rotation of the magnetic disk. Thus, the magnetic head is prevented from coming into contact with the disk (head crash) and damaging the disk during high-speed rotation. The floating height of the magnetic head has been decreasing with the increasing recording density. Today, a floating height as small as 10 to 20 nm has been realized by using a magnetic disk having a magnetic layer on a super smooth and mirror-polished glass substrate. In a recording medium, a combination of a CoPtCr-based magnetic layer and a Cr-based underlayer is usually used. When formed in a high temperature of 200 to 500°C, the CoPtCr-based magnetic layer is controlled by the Cr-based underlayer so that the easy magnetization direction may be in-plane. Further, segregation of Cr in the CoPtCr-based magnetic layer is promoted to separate magnetic domains in the magnetic layer. Such technological innovation including reduction of head floating height, improvement on head structure, and improvement on disk recording film has brought about drastic increases of in-plane recording density and recording capacity of a hard disk drive in these few years.

The increase of digital data that can be handled has created the need to store a large volume of data such as moving image data in a removable medium and to transfer the stored data to other media. Because of its rigidity and so low head floating with the head, a hard disk cannot be used as a removable medium like a flexible disk or a rewritable optical disk on account of high possibility of troubles due to crashes or dust entrapment during rotation.

A longitudinal recording system, which has now widely spread, is said to have limitation in achievable recording density because of the thermal fluctuation problem caused by reduction in recording bit length and to meet difficulty in writing on a high coercivity medium with a magnetic head.

High-temperature sputtering techniques for film formation are low in productivity and costly in large volume manufacturing of recording media, resulting in uncompetitive prices.

On the other hand, a flexible disk, the substrate of which is a flexible polymer film, enjoys exchangeability and can be manufactured at lower cost. However, a flexible disk having the same magnetic layer as formed on a rigid substrate is difficult to put into practical use because the polymer film substrate is seriously damaged by heat in magnetic layer formation. To overcome this problem, it has been suggested to use a heat-resistant polymer, such as polyimide or aromatic polyamide, but the attempt is difficult to carry out on account of the high cost of these heat-resistant polymer films. If a magnetic layer is formed on a polymer film in its cooled state to avert thermal damage, the resulting magnetic layer will have insufficient magnetic characteristics, resulting in a failure to improve recording density.

It has come to be known that a ferromagnetic metal thin film comprising a ferromagnetic metal alloy and a non-magnetic oxide which is formed at room temperature exhibits substantially the same magnetic characteristics as by a CoPtCr-based magnetic layer formed under a high temperature (200 to 500°C) condition. Such a ferromagnetic metal thin film comprising a ferromagnetic metal alloy and a non-magnetic oxide has a so-called granular structure as is proposed for hard disks. Among this kind of magnetic layers are those disclosed in JP-A-5-73880 and JP-A-7-311929. Nevertheless there still are the same problems to be solved as described above with respect to hard disks before a further increase in recording density is achieved.

In order to settle the outstanding problems and to greatly improve in-plane recording density, a perpendicular magnetic recording system has been under study. Aperpendicularmagnetic recording system is a recording system using a perpendicular magnetic recording medium having a perpendicular magnetization layer whose easy magnetization axis is in the thickness direction, in which a magnetic head capable of generating an intense magnetization distribution in the thickness direction of the medium is used to leave remnant perpendicular magnetization. Such a perpendicular magnetic recording medium now under study comprises a rigid substrate having provided thereon a soft magnetic layer having high permeability and a perpendicular magnetization layer having high perpendicular magnetic anisotropy.

Recordable or rewritable optical disks represented by DVD-R/RW have been widely spread for their excellent exchangeability because the disks are not brought so close to a head as magnetic disks. However, it is difficult to use an optical disk with a recording layer on both sides thereof like a two-sided magnetic disk in view of the thickness of a light pickup and cost. Furthermore, an optical disk has a lower in-plane recording density and a lower speed of data transfer than a magnetic disk and is therefore not seen as having sufficient performance, taking applicability as a rewritable high-capacity recording medium into consideration.

A high-capacity rewritable and removable recording medium that is satisfactory in characteristics, reliability, and cost performance has not been developed despite of the high demand therefor.

### SUMMARY OF THE INVENTION

An object of the present invention is to provide a high-capacity perpendicular magnetic recording medium that is inexpensive and yet excellent in performance and reliability by using a recording layer which can be formed at room temperature.

The above object of the invention is accomplished by a perpendicular magnetic recording medium having a substrate and a recording layer provided on at least one side of the substrate, the recording layer comprising a cobalt-containing ferromagnetic metal alloy and a non-magnetic oxide. The substrate is preferably a flexible polymer film.

Having a ferromagnetic metal thin film comprising a ferromagnetic metal alloy containing cobalt and a non-magnetic oxide, the magnetic recording medium of the invention exhibits sufficient perpendicular magnetization characteristics even where the magnetic layer is formed at room temperature. Therefore, the substrate does not suffer from thermal damage during film formation, whether it is heat-resistant (e.g., a glass substrate or an aluminum substrate) or not (e.g., a polymer film) , to provide a magnetic tape or a flexible disk free from deformation.

### BRIEF DESCRIPTION OF THE DRAWING

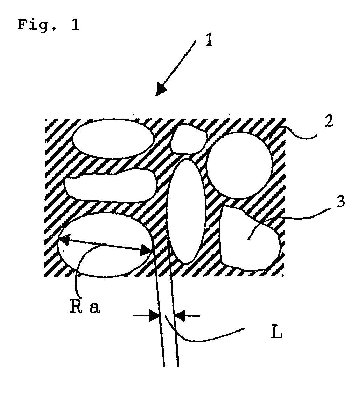

Fig. 1 schematically illustrates the cut area of a recording layer according to the invention, cut in parallel with the recording plane.

### DETAILED DESCRIPTION OF THE INVENTION

The substrate which can be used in the invention includes flexible polymer films, an aluminum sheet, and a glass sheet. Flexible polymer films are preferred for productivity. The magnetic recording medium having a flexible polymer substrate includes tapes and flexible disks. A flexible disk having a flexible polymer substrate has a hub hole in the center and resides in a protective shell or jacket made of plastics, etc. The shell usually has a head access aperture through which the magnetic disk is wrote or read. The head access aperture is usually covered with a metallic shutter.

In addition to the substrate and the recording layer, the magnetic recording medium can have additional layers. The magnetic recording medium of the invention preferably comprises an undercoating layer for improving surface properties and gas barrier properties, a softmagnetic layer, an intermediate layer, an underlayer, the magnetic layer, a protective layer for protecting the magnetic layer from corrosion and wear, and a lubricating layer for improving running durability and corrosion resistance, provided on the substrate in the order described. A magnetic recording disk, one embodiment of the magnetic recording medium of the invention, usually has the above-described stack of layers on each side thereof. A magnetic recording tape, another embodiment of the magnetic recording medium of the invention, usually has the above-described stack of layers on one side thereof or, in some cases, on both sides thereof.

The recording layer is a perpendicular magnetization film having an easymagnetization axis in the direction perpendicular to the recording layer plane. The direction of the easy magnetization axis is controllable by the material of the underlayer, the crystal structure or composition of the magnetic layer, and magnetic layer forming conditions.

In the magnetic recording layer, the ferromagnetic metal alloy containing Co and the non-magnetic oxide are present in a mixed state under macroscopic observation. When observed microscopically, fine particles of the ferromagnetic metal alloy are covered with the non-magnetic oxide or dispersed as islands in the non-magnetic oxide matrix as illustrated in Fig. 1, which is a schematic cross-section of the recording layer taken in parallel with the magnetic layer plane. The maximum size (length) Ra of the ferromagnetic metal alloy grains is about 1 to 110 nm. The distance L between neighboring ferromagnetic metal alloy grains is about 1 to 110 nm. It is acceptable that the distance L can be zero in parts. Such a microscopic structure achieves high coercivity and a narrow magnetic grain size distribution, promising low noise.

The Co-containing ferromagnetic metal alloy includes alloys comprising (1) Co and (2) Cr and/or Pt, and/or (3) other elements such as Ni, Fe, B, Si, Ta, Nb, and Ru. From the standpoint of recording characteristics, preferred are Co-Pt-Cr, Co-Pt-Cr-Ta, Co-Pt-Cr-B, and Co-Ru-Cr.

The non-magnetic oxide which can be used in the invention includes an oxide of Si, Zr, Ta, B, Ti, Al, Cr, Ba, Zn, Na, La, In, Pb, etc. From the viewpoint of recording characteristics, an oxide of silicon is the most preferred.

The ratio of the Co-containing ferromagnetic metal alloy to the non-magnetic oxide preferably ranges from 95:5 to 80:20 in terms of atomic ratio. Where the ferromagnetic metal alloy is more than this range, isolation of magnetic grains would be insufficient, tending to result in reduced coercivity. Where it is less than the range, the magnetization will be reduced, tending to result in remarkable reduction of signal output.

The recording layer comprising the Co-containing ferromagnetic metal alloy and the non-magnetic oxide preferably has a thickness of 10 to 60 nm, particularly 20 to 40 nm. A larger thickness results in markedly increased noise, and a smaller thickness results in remarkable reduction of output.

The recording layer used in the invention can be formed by vacuum deposition techniques, such as evaporation and sputtering. Sputtering is suitable for ease in forming an ultrathin film with good quality. Sputtering is carried out by either DC sputtering or RF sputtering. A roll-to-roll or web sputtering system in which a continuous web is treated is advantageous. A batch sputtering system or an in-line sputtering system as adopted in the production of hard disks is also useful.

As usual, argon gas can be used as a sputtering gas . Other rare gases are also employable. The sputtering gas may contain a trace amount of oxygen gas for the purpose of adjusting the oxygen content of the non-magnetic oxide or oxidizing the surface of the recording layer.

It is possible to carry out Co-sputtering using a ferromagnetic metal alloy and a non-magnetic oxide as separate targets to form the recording layer comprising the Co-containing ferromagnetic metal alloy and the non-magnetic oxide. It is preferred to use an alloy target comprising the Co-containing ferromagnetic metal alloy and the non-magnetic oxide so as to improve the magnetic grain size distribution thereby to form a homogeneous film. The alloy target is prepared by hot pressing.

The underlayer serves to control the crystal orientation, namely lattice constant, of the recording layer thereby controlling the magnetic orientation of the recording layer to achieve improvement in the performance of the perpendicular magnetic recording medium. To meet this purpose, the alloy composition of the underlayer is so selected. An Ru alloy or a Ti alloy is particularly preferred. The underlayer also contributes to stress relaxation in the whole magnetic recording medium.

The Ru alloy is preferably one comprising Ru and at least one element selected from Co, Be, Os, Re, Ti, Zn, Ta, Al, Cr, Mo, W, Fe, Sb, Ir, Rh, Pt, Pd, Si, and Zr. Ru alloys containing other elements are also useful.

The mixing ratio of Ru to other elements preferably ranges 99:1 to 50:50, particularly 95:5 to 60:40 (atomic ratio) . Out of this range, control of the recording layer crystal orientation is difficult, tending to result in poor magnetic characteristics.

The Ti alloy is preferably one comprising Ti and at least one element selected from Co, Be, Os, Re, Cr, Zn, Ta, Al, Mo, W,V, Fe, Sb, Ir, Ru, Rh, Pt, Pd, Si, and Zr. Ti alloys containing other elements are also useful.

The mixing ratio of Ti to other elements preferably ranges 99:1 to 50:50, particularly 95:5 to 60:40 (atomic ratio) . Out of this range, control of the recording layer crystal orientation is difficult, tending to result in poor magnetic characteristics.

Use of such an underlayer improves the orientation of the recording layer, bringing about improved recording characteristics.

The underlayer preferably has a thickness of 10 to 200 nm, particularly 10 to 100 nm. A thicker underlayer causes poor productivity and has increased film stress. A thinner underlayer may fail to serve for improvement on magnetic characteristics.

The underlayer can be formed by vacuum deposition techniques, such as evaporation and sputtering. Sputtering is particularly suitable for forming a good quality ultrathin film with ease. Sputtering is carried out by either DC sputtering or RF sputtering. A roll-to-roll sputtering system in which a continuous web is treated is suited to produce flexible disks having a flexible polymer film as a substrate. A batch sputtering system and an in-line sputtering system as adopted for film formation on an aluminum or glass substrate are also useful.

As usual, argon gas can be used as a sputtering gas. Other rare gases are also employable. The sputtering gas may contain a trace amount of oxygen gas for the purpose of controlling lattice constant of the underlayer or relaxing the film stress.

It is preferred to use a single alloy target so as to precisely control the lattice constant, etc. and to form a homogeneous film. The alloy target is prepared by hot pressing.

The soft magnetic layer can be of materials based on FePt, CoPt, FeC, FeTa, FeNi, etc. In view of the noise increase problem accompanying the domain wall structure of the soft magnetic layer during perpendicular magnetic recording, the soft magnetic layer may be designed to have a granular structure like a mixture of a soft magnetic substance and a non-magnetic substance. A granular soft magnetic layer provides a satisfactory perpendicular magnetic recording medium because it is very compatible with the granular perpendicular magnetization layer in terms of crystal orientation and film stress and also effective in reducing the noise that is generally said to be caused by domain wall motion.

Non-magnetic substances which can be used to form a granular soft magnetic layer includes oxides of Si, Zr, Ta, B, Ti, Al, Cr, Ba, Zn, Na, La, In, Pb, etc., with a silicon oxide being preferred in view of recording characteristics.

The thickness of the soft magnetic layer is preferably 50 to 500 nm, still preferably 100 to 400 nm. A thicker soft magnetic layer causes low productivity. A thinner one may fail to serve for improvement on perpendicular magnetic recording characteristics.

The soft magnetic layer can be formed by vacuum deposition techniques, such as vacuum evaporation and sputtering. Sputtering is particularly suitable for ease in forming an ultrathin film with good quality.

The substrate is preferably a flexible polymer film for avoiding the shocks on contact between the magnetic disk and a magnetic head. Useful flexible polymers include aromatic polyimide, aromatic polyamide, aromatic polyamide-imide, polyether ketone, polyether sulfone, polyether imide, polysulfone, polyphenylene sulfide, polyethylene naphthalate, polyethylene terephthalate, polycarbonate, cellulose triacetate, and fluorine resins. Because satisfactory recording characteristics can be assured without heating the substrate in vacuum deposition, polyethylene terephthalate or polyethylene naphthalate is preferred for its low cost and satisfactory surface properties.

A laminated film composed of polymer films of the same or different kinds may be used as a substrate. Use of a laminated film is effective in reducing warpage or waviness of the substrate *per se.* As a result, the head crash frequency and the head crash shock are reduced to avert damage to the magnetic layer.

Laminating is carried out by hot roll lamination or hot press lamination, or with an adhesive. The adhesive may be applied directly to an adherent or transferred from a release sheet to an adherent. The adhesive is not particularly limited and includes ordinary hot-melt adhesives, thermosetting adhesives, UV curing adhesives, EB curing adhesives, pressure-sensitive adhesives, and anaerobic adhesives.

The thickness of the flexible substrate is preferably 10 to 200 µm, still preferably 20 to 150 µm, particularly preferably 30 to 100 µm. With a substrate thickness smaller than 10 µm, the disk has reduced high-speed spinning stability, tending to cause increased axial runout. A substrate with a thickness exceeding 200 µm is so rigid that the shocks on contact with a magnetic head are hardly absorbed, which can cause the head to jump up.

The stiffness of the flexible substrate is represented by Ebd³/12, wherein E is a Young's modulus; b is a film width; and d is a film thickness. It is preferably 0.5 to 2.0 kgf/mm² (≈4.9 to 19.6 MPa), still preferably 0.7 to 1.5 kgf/mm² (≈6.9 to 14.7 MPa), with the film width b being set at 10 mm.

It is desirable that the surface of the substrate be as smooth as possible for recording with a magnetic head. Surface roughness of the substrate significantly influences the signal recording and reproduction characteristics. Specifically, a substrate on which an undercoating layer described later is to be provided preferably has a mean surface average roughness SRa of 5 nm or smaller, particularly 2 nm or smaller, as measured with an optical profilometer and a projection height of 1 µm or smaller, particularly 0.1 µm or smaller, as measured with a stylus type profilometer. A substrate on which an undercoating layer is not to be provided preferably has a mean surface average roughness SRa of 3 nm or smaller, particularly 1 nm or smaller as measured with an optical profilometer and a projection height of 0.1 µm or smaller, particularly 0.06 µm or smaller, as measured with a stylus type profilometer.

It is preferred to provide an undercoating layer on the magnetic layer side of the substrate for improving surface smoothness and gas barrier properties. Since the magnetic layer is formed by sputtering or a like deposition technique, the undercoating layer is required to have heat resistance. Useful materials for forming the undercoating layer include polyimide resins, polyamide-imide resins, silicone resins, and fluorine resins. Thermosetting polyimide resins and thermosetting silicone resins are particularly preferred for their high smoothing effect. The undercoating layer preferably has a thickness of 0.1 to 3.0 µm. Where a laminate film is used as a flexible substrate, the undercoating layermay be formed either before or after the lamination.

Suitable thermosetting polyimide resins include those obtained by thermal polymerization of an imide monomer containing at least two unsaturated end groups per molecule, such as Bis-allyl-nadi-imide (BANI) series available from Maruzen Petrochemical Co., Ltd. This series of imide monomers are allowed to be applied to the substrate and then thermally polymerized (set) at relatively low temperatures on the substrate. Further, they are soluble in universal solvents, which is advantageous for productivity and workability. Furthermore they have a low molecular weight to provide a low viscosity monomer solution, which easily fills up surface depressions to produce high leveling performance.

Suitable thermosetting silicone resins include those prepared by a sol-gel method starting with an organic group-containing silicon compound. Silicone resins of this type have a structure of silicon dioxide with part of its bonds substituted with an organic group. Much more heat-resistant than silicone rubbers and more flexible than a silicon dioxide film, they are capable of forming such a resin film on a flexible substrate that will hardly suffer from cracks or peel. Since the monomer of these silicone resins is allowed to be applied directly to the substrate followed by setting, universal solvents are employable to prepare a monomer solution, which easily fills up surface depressions to produce high leveling performance. In addition, the monomer solution can be designed to start polycondensation reaction from relatively low temperatures by addition of a catalyst, such as an acid or a chelating agent. That is, the curing reaction completes in a short time, which enables use of a general-purpose coating apparatus to form a resin film. Furthermore, the thermosetting silicone resin exhibits high barrier properties against gases which may generate from the substrate during recording layer formation and hinder the crystallinity and orientation of the recording layer or the underlayer.

For the purpose of reducing the true contact area between the head and the disk thereby to improve sliding properties, it is preferred to provide the surface of the undercoating layer with micro projections. A substrate having such a textured undercoating layer will have improved handling properties. Micro projections can be formed by, for example, applying spherical silica particles or an emulsion of organic powder. In order to secure high heat resistance of the undercoating layer, application of spherical silica particles is preferred.

The micro projections preferably have a height of 5 to 60 nm, particularly 10 to 30 nm. Too high micro projections result in increased spacing loss between the head and the medium, which deteriorates recording and reproduction characteristics. Too low micro projections produce insubstantial effects in improving sliding characteristics. The density of the micro projections is preferably 0.1 to 100/µm², still preferably 1 to 10/µm². At too small a micro projection density, the sliding properties improving effects are insubstantial. Too high a micro projection density can cause the applied fine particles to agglomerate into unfavorably high projections.

It is possible to fix the micro projections to the substrate surface with a binder resin. Binder resins are preferably selected from those with sufficient heat resistance, such as solvent-soluble polyimide resins, thermosetting polyimide resins, and thermosetting silicone resins.

Cases are sometimes met with in which the presence of the soft magnetic layer disturbs the initial growth layer of the underlayer, resulting in insufficient control on crystal orientation of the recording layer. In order to prevent this and to draw out the effects of the soft magnetic layer and the underlayer, it is effective to provide an intermediate layer between the soft magnetic layer and the underlayer for preventing the disturbance of the initial growth layer. The intermediate layer can be of Ta, Ta-Si, Al, Bi, Pd, Ti, Cu, Ni-P, Ni-Al, Ru, W, Si, C, Pt, Mn, Ir, Ti-W, Zn-Si, Al-Ti, etc.

The intermediate layer can be formed by vacuum deposition techniques, such as evaporation and sputtering. Sputtering is suitable for ease in forming an ultrathin film with good quality.

The intermediate layer preferably has a thickness of 1 to 100 nm, particularly 3 to 50 nm. Where the thickness is larger than 100 nm, productivity deteriorates, and the effects of the soft magnetic layer hardly develops. With a thickness smaller than 1 nm, the effect on the disturbance of the initial growth layer is not obtained.

The protective layer protects metallic materials of the magnetic layer against corrosion and prevents wear of the magnetic disk due to pseudo-contact or sliding contact with a magnetic head thereby improving running durability and anticorrosion. Materials for forming the protective layer include oxides, such as silica, alumina, titania, zirconia, cobalt oxide, and nickel oxide; nitrides, such as titanium nitride, silicon nitride, and boron nitride; carbides, such as silicon carbide, chromium carbide, and boron carbide; and carbonaceous materials, such as graphite and amorphous carbon.

The protective layer preferably has the same or higher hardness than the magnetic head and a stable, long-lasting anti-seizure effect during sliding for exhibiting excellent sliding durability. From the standpoint of anticorrosion, the protective layer is preferably free from pinholes. Among such a protective layer is a hard carbon film called diamond-like carbon (DLC) formed by CVD.

The protective layer may have a multilayer structure, i.e., a stack of two or more thin films having different properties. For example, a dual-layer protective layer having a DLC film on the outer side for improving sliding characteristics and a nitride layer (e.g., silicon nitride) on the inner side for improving anticorrosion will promise high levels of anticorrosion and durability.

The lubricating layer, which is provided on the protective layer for improving running durability and anticorrosion, contains known lubricants, such as hydrocarbon lubricants, fluorine lubricants, and extreme pressure additives.

The hydrocarbon lubricants include carboxylic acids, such as stearic acid and oleic acid; esters, such as butyl stearate, sulfonic acids, such as octadecylsulfonic acid, phosphoric esters, such as monooctadecyl phosphate; alcohols, such as stearyl alcohol and oleyl alcohol; carboxylic acid amides, such as stearamide; and amines, such as stearylamine.

The fluorine lubricants include the above-recited hydrocarbons with part or the whole of their alkyl moiety being displaced with a fluoroalkyl group or aperfluoropolyether group. The perfluoropolyether group includes those derived from perfluoromethylene oxide polymers, perfluoroethylene oxide polymers, perfluoro-n-propylene oxide polymers (CF₂CF₂CF₂O)ₙ, perfluoroisopropylene oxide polymers (CF(CF₃)CF₂O)ₙ, and copolymers of these monomer units. A perfluoromethylene-perfluoroethylene copolymer having a hydroxyl group at the molecular end (Fomblin Z-DOL, available from Ausimont) is an example.

The extreme pressure additives include phosphoric esters, such as trilauryl phosphate; phosphoric esters, such as trilauryl phosphite; thiophosphoric esters, such as trilauryl trithiophosphite; thiophosphoric esters; and sulfur type ones, such as dibenzyl disulfide.

These lubricants can be used either individually or as a combination of two or more thereof. The lubricating layer is formed by applying a solution of a desired lubricant in an organic solvent to the protective layer by spin coating, wire coating, gravure coating, dip coating or like coating methods, or by depositing a lubricant by vacuum evaporation. The amount of the lubricant to be applied is preferably 1 to 30 mg/m², still preferably 2 to 20 mg/m².

In order to further improve anticorrosion, a combined use of a corrosion inhibitor is recommended. Useful corrosion inhibitors include nitrogen-containing heterocyclic compounds, such as benzotriazole, benzimidazole, purine, and pyrimidine, and derivatives thereof having an alkyl side chain, etc. introduced into their nucleus; and nitrogen- and sulfur-containing heterocyclic compounds, such as benzothiazole, 2-mercaptobenzothiazole, tetraazaindene compounds, and thiouracil compounds, and their derivatives. The corrosion inhibitor may be mixed into the lubricant solution to be applied to the protective layer, or may be applied to the protective layer before the lubricating layer is formed. The amount of the corrosion inhibitor to be applied is preferably 0.1 to 10 mg/m², still preferably 0.5 to 5 mg/m².

An example of the process for producing the magnetic recording medium of the present invention will be described below, in which a recording layer and other layers are formed on a flexible polymer substrate of continuous length using a sputtering system. The vacuum chamber is evacuated by a vacuum pump to maintain a given pressure, and argon gas is fed therein through a gas feed pipe at a given flow rate. The flexible polymer substrate unrolled from a feed roll is fed along a film forming roll with its tension adjusted by tension control rolls. A soft magnetic layer, an intermediate layer, an underlayer, and a recording layer are successively deposited on one side of the substrate using the respective targets. In the production of two-sided magnetic recording medium, the same layer structure is built up on the other side of the substrate in the same manner with the recording layer side of the web in contact with another film forming roll. The resulting film having the recording layer on one or both sides thereof is rolled around a take-off roll.

A protective layer represented by a DLC film is formed on the recording layer by CVD. As an example of CVD processing, RF plasma enhanced CVD is carried out as follows. The flexible polymer substrate having the recording layer is unrolled and transported along a film forming roll with a bias voltage applied from a bias power source to the recording layer. A reactive gas comprising a hydrocarbon, nitrogen, a rare gas, etc. is decomposed by plasma generated by radiofrequency voltage to deposit a carbon protective film containing nitrogen or a rare gas, and the thus coated substrate is rolled on a wind-up roll. Prior to the CVD, the surface of the recording layer may be cleaned by glow treatment with a rare gas or hydrogen gas to have an improved adhesion to the CVD film. The adhesion may further be enhanced by forming a silicon intermediate layer, etc. on the recording layer.

### EXAMPLES

The present invention will now be illustrated in greater detail with reference to Examples, but it should be understood that the invention is not limited thereto.

### EXAMPLE 1

A coating composition for undercoating layer consisting of 3-glycidoxypropyltrimethoxysilane, phenyltriethoxysilane, hydrochloric acid, tris(acetylacetonato)aluminum, and ethanol was applied to a polyethylene naphthalate film substrate having a thickness of 63 µm and a surface roughness Ra of 1.4 nm by gravure coating and dried and cured at 100°C to form a 1.0 µm thick undercoating layer of a silicone resin. A mixture of silica sol having a particle size of 25 nm and the coating composition for undercoating layer described above was applied to the undercoating layer by gravure coating to form micro projections having a height of 15 nm on the undercoating layer at a density of 10 projections/µm². The undercoating layer and the micro projections were formed on both sides of the substrate. The roll of the web was set in a roll-to-roll sputtering system, and the web was carried through the deposition chamber in intimate contact with a water-cooled cylindrical can. A recording layer having the composition of (Co:Pt:Cr=70:20:10 atomic ratio):SiO₂=88:12 atomic ratio, i.e., (Co₇₀Pt₂₀Cr₁₀)₈₈-(SiO₂)₁₂ was formed on the undercoating layer by DC magnetron sputtering to a deposit thickness of 25 nm. The recording layer was formed on both sides of the web. The coated web was set in a roll-to-roll CVD system. A reactive gas consisting of ethylene, nitrogen and argon was fed into the deposition chamber, and a bias voltage of -500 V was applied to the recording layer. RF plasma-enhanced CVD was carried out to deposit a nitrogen-doped DLC protective layer having a C:H:N molar ratio of 62:29:7 to a thickness of 10 nm. The protective layer was formed on each recording layer. A solution of perfluoropolyether lubricant Fomblin Z-DOL (from Ausimont) in a hydrofluoroether solvent (HFE-7200, from Sumitomo 3M) was applied to the protective layer by gravure coating to form a 1 nm thick lubricating layer. The lubricating layer was formed on each protective layer. The resulting coated web was punched into 3.7" disks, and the disks were each burnished with lapping tape and put into a resin cartridge Zip 100 (from Fuji Photo Film) to prepare two-sided flexible disks.

### EXAMPLE 2

The web having the undercoating layer prepared in Example 1 was punched into disks of 130 mm in diameter. The disk was fixed on a circular ring holder of a batch sputtering system, and a recording layer having the same composition as in Example 1 was formed by sputtering on both sides of the disk. A protective layer was formed by CVD in the same manner as in Example 1 on each recording layer. A lubricating layer having the same composition as in Example 1 was formed on each protective layer by dip coating. The resulting coated disk was punched into a 3.7" disk, which was burnished with lapping tape and put into a resin cartridge Zip 100 (from Fuji Photo Film) to prepare a flexible disk.

### EXAMPLES 3 TO 24

Flexible disks were produced in the same manner as in Example 1, except that an Ru alloy underlayer shown in Table 1 below was formed between the undercoating layer and the recording layer.

**TABLE 1**

| Example No. | Alloy Composition | | Thickness (nm) |
|---|---|---|---|
| | Element 1 (At.%) | Element 2 (At.%) | |
| 3 | Ru (90) | Cr (10) | 40 |
| 4 | Ru (90) | Cr (10) | 60 |
| 5 | Ru (80) | Cr (20) | 40 |
| 6 | Ru (95) | Cr (5) | 40 |
| 7 | Ru (90) | Be (10) | 40 |
| 8 | Ru (90) | Si (10) | 40 |
| 9 | Ru (90) | Zr (10) | 40 |
| 10 | Ru (90) | Co (10) | 40 |
| 11 | Ru (90) | Os (10) | 40 |
| 12 | Ru (90) | Re (10) | 40 |
| 13 | Ru (90) | Ti (10) | 40 |
| 14 | Ru (90) | Zn (10) | 40 |
| 15 | Ru (90) | Ta (10) | 40 |
| 16 | Ru (90) | Al (10) | 40 |
| 17 | Ru (90) | Mo (10) | 40 |
| 18 | Ru (90) | W (10) | 40 |
| 19 | Ru (90) | Fe (10) | 40 |
| 20 | Ru (90) | Sb(10) | 40 |
| 21 | Ru (90) | Ir (10) | 40 |
| 22 | Ru (90) | Rh (10) | 40 |
| 23 | Ru (90) | Pt (10) | 40 |
| 24 | Ru (90) | Pd (10) | 40 |

### EXAMPLES 25 To 47

Flexible disks were produced in the same manner as in Example 1, except that a Ti alloy underlayer shown in Table 2 below was formed between the undercoating layer and the recording layer.

**TABLE 2**

| Example No. | Alloy Composition | | Thickness (nm) |
|---|---|---|---|
| | Element 1 (At.%) | Element 2 (At.%) | |
| 25 | Ti (80) | Ru (20) | 40 |
| 26 | Ti (80) | Ru (20) | 20 |
| 27 | Ti (90) | Ru (10) | 60 |
| 28 | Ti (80) | Ru (20) | 60 |
| 29 | Ti (80) | Be (20) | 60 |
| 30 | Ti (80) | Si (20) | 60 |
| 31 | Ti (80) | Zr (20) | 60 |
| 32 | Ti (80) | Co (20) | 60 |
| 33 | Ti (80) | Os (20) | 60 |
| 34 | Ti (80) | Re (20) | 60 |
| 35 | Ti (80) | Cr (20) | 60 |
| 36 | Ti (80) | Zn (20) | 60 |
| 37 | Ti (80) | Ta (20) | 60 |
| 38 | Ti (80) | Al (20) | 60 |
| 39 | Ti (80) | Mo (20) | 60 |
| 40 | Ti (80) | W (20) | 60 |
| 41 | Ti (80) | V (20) | 60 |
| 42 | Ti (80) | Fe (20) | 60 |
| 43 | Ti (80) | Sb (20) | 60 |
| 44 | Ti (80) | Ir (20) | 60 |
| 45 | Ti (80) | Rh (20) | 60 |
| 46 | Ti (80) | Pt (20) | 60 |
| 47 | Ti (80) | Pd (20) | 60 |

### EXAMPLE 48

Flexible disks were produced in the same manner as in Example 3, except that an Fe-Ta-C soft magnetic layer was formed between the undercoating layer and the underlayer.

### EXAMPLES 49 TO 68

Flexible disks were produced in the same manner as in Example 48, except that an intermediate layer shown in Table 3 below was provided between the soft magnetic layer and the underlayer.

**TABLE 3**

| Example No. | Intermediate Layer | Thickness (nm) |
|---|---|---|
| 49 | Ta | 5 |
| 50 | Al | 5 |
| 51 | Bi | 5 |
| 52 | Pd | 5 |
| 53 | Ti | 5 |
| 54 | Cu | 5 |
| 55 | Ru | 5 |
| 56 | W | 5 |
| 57 | Si | 5 |
| 58 | C | 5 |
| 59 | Pt | 5 |
| 60 | Mn | 5 |
| 61 | Ir | 5 |
| 62 | Ta-Si | 5 |
| 63 | Ni-P | 5 |
| 64 | Ni-Al | 5 |
| 65 | Ti-W | 5 |
| 66 | Zn-Si | 5 |
| 67 | Al-Ti | 5 |
| 68 | Pd-Ti | 5 |

### EXAMPLE 69

A hard disk was produced in the same manner as in Example 1, except that the polymer film substrate was replaced with a mirror-polished 3.7" glass disk with no undercoating layer. The disk was not put into a cartridge.

### COMPARATIVE EXAMPLE 1

A flexible disk was produced in the same manner as in Example 1, except for changing the recording layer composition to Co₇₀Pt₂₀Cr₁₀.

### COMPARATIVE EXAMPLE 2

A flexible disk was produced in the same manner as in Comparative Example 1, except that a Cr underlayer was formed under the recording layer.

### COMPARATIVE EXAMPLE 3

A flexible disk was produced in the same manner as in Comparative Example 1, except that an FeTaC soft magnetic layer was provided under the recording layer.

The recording media produced in Examples and Comparative Examples were evaluated in accordance with the following methods . The results obtained are shown in Table 4.

### 1) Magnetic Characteristics

Perpendicular coercive force (Hc⊥) was measured with a vibrating sample magnetometer.

### 2) Axial Runout

The axial runout of the flexible or hard disk rotating at 3000 rpm was measured at a radius of 35 mm with a laser displacement meter.

### 3) C/N Ratio

Signals were recorded at a radius of 35 mm under conditions of linear density of 130 kFCI, a spinning speed of 3000 rpm and reproduced with an MR head having a track width of 2.2 µm and a gap length of 0.26 µm to obtain a carrier to noise (C/N) ratio. The head load force was 3 gf. The C/N ratio was expressed relatively taking that of Example 1 as a standard.

### 4) Modulation (MDN)

The output signals in the C/N ratio measurement for the full circle were envelope-detected to obtain the minimum output to maximum output (Min/Max) ratio.

**TABLE 4**

| Example No. | Hc⊥ (kA/m) | Axial Runout (µm) | C/N Ratio (dB) | MDN (%) |
|---|---|---|---|---|
| 1 | 221 | 25 | 0 | 95 |
| 2 | 240 | 30 | +1.0 | 92 |
| 3 | 285 | 35 | +1.6 | 94 |
| 4 | 263 | 35 | -1.4 | 92 |
| 5 | 231 | 28 | +0.4 | 96 |
| 6 | 271 | 40 | +0.8 | 91 |
| 7 | 239 | 20 | +1.6 | 96 |
| 8 | 247 | 19 | +1.6 | 97 |
| 9 | 259 | 25 | +1.4 | 96 |
| 10 | 302 | 38 | +1.6 | 90 |
| 11 | 271 | 30 | +1.4 | 94 |
| 12 | 283 | 35 | +1.4 | 93 |
| 13 | 288 | 28 | +1.0 | 90 |
| 14 | 267 | 33 | +1.0 | 92 |
| 15 | 255 | 35 | +0.8 | 92 |
| 16 | 231 | 40 | +0.2 | 90 |
| 17 | 271 | 35 | +1.6 | 93 |
| 18 | 260 | 40 | +0.6 | 90 |
| 19 | 285 | 48 | +1.0 | 90 |
| 20 | 270 | 32 | +1.4 | 94 |
| 21 | 285 | 32 | +1.5 | 93 |
| 22 | 270 | 34 | +1.4 | 92 |
| 23 | 205 | 30 | +1.4 | 93 |
| 24 | 247 | 25 | +1.2 | 92 |
| 25 | 218 | 35 | +0.2 | 92 |
| 26 | 190 | 25 | -1.8 | 96 |
| 27 | 179 | 40 | -2.6 | 91 |
| 28 | 230 | 20 | +1.1 | 96 |
| 29 | 220 | 15 | +0.6 | 97 |
| 30 | 218 | 17 | +0.2 | 96 |
| 31 | 240 | 35 | +1.5 | 90 |
| 32 | 228 | 30 | +1.3 | 94 |
| 33 | 238 | 35 | +1.4 | 93 |
| 34 | 255 | 35 | +1.8 | 91 |
| 35 | 239 | 30 | +1.5 | 92 |
| 36 | 235 | 35 | +1.1 | 92 |
| 37 | 230 | 40 | +0.2 | 90 |
| 38 | 260 | 30 | +1.4 | 93 |
| 39 | 228 | 40 | +0.6 | 90 |
| 40 | 229 | 40 | +0.4 | 91 |
| 41 | 235 | 40 | +1.0 | 90 |
| 42 | 236 | 30 | +1.4 | 94 |
| 43 | 220 | 35 | +1.5 | 93 |
| 44 | 215 | 35 | +0.7 | 92 |
| 45 | 260 | 40 | +1.2 | 93 |
| 46 | 238 | 30 | +1.2 | 92 |
| 47 | 259 | 20 | +1.8 | 97 |
| 48 | 285 | 35 | +2.6 | 94 |
| 49 | 278 | 26 | +2.8 | 96 |
| 50 | 288 | 28 | +2.7 | 93 |
| 51 | 296 | 30 | +3.0 | 90 |
| 52 | 296 | 32 | +3.0 | 92 |
| 53 | 293 | 29 | +3.1 | 95 |
| 54 | 299 | 26 | +3.1 | 96 |
| 55 | 285 | 28 | +2.9 | 95 |
| 56 | 288 | 29 | +2.8 | 94 |
| 57 | 279 | 25 | +2.2 | 96 |
| 58 | 286 | 27 | +2.4 | 95 |
| 59 | 305 | 27 | +3.2 | 93 |
| 60 | 299 | 34 | +2.5 | 90 |
| 61 | 300 | 32 | +2.5 | 91 |
| 62 | 277 | 24 | +1.9 | 94 |
| 63 | 302 | 26 | +3.1 | 93 |
| 64 | 298 | 29 | +2.9 | 92 |
| 65 | 279 | 35 | +2.0 | 93 |
| 66 | 269 | 22 | +2.4 | 96 |
| 67 | 297 | 27 | +2.8 | 95 |
| 68 | 304 | 25 | +3.1 | 93 |
| 69 | 210 | 10 | -1.0 | 98 |

| Comparative Example: | | | | |
|---|---|---|---|---|
| 1 | 132 | 30 | -6.8 | 90 |
| 2 | 155 | 30 | -4.0 | 92 |
| 3 | 167 | 27 | -3.4 | 92 |

The results in Table 4 prove the flexible disks of the invention very excellent in recording and reproduction characteristics. In particular, it is seen that introduction of an underlayer achieves high coercivity and reduction of noise caused by the presence of a soft magnetic layer. In Comparative Example 1 wherein the recording layer does not contain a non-magnetic oxide (SiO₂), the disk has reduced coercivity and reduced recording characteristics. This seems to be because segregation of Cr does not occur in room temperature film formation, resulting in insufficient magnetic separation in the recording layer. In Example 69 where a glass substrate is used, a slight reduction in C/N ratio is observed as compared with the flexible disk of Example 1 that is prepared in the same manner. This is due to relative reduction in output, which is considered to be because of a larger floating height of the head than on a flexible disk.

The present invention provides a magnetic recording medium which is suited for use in high-density perpendicular magnetic recording systems and has low noise by virtue of reduced magnetic interaction between ferromagnetic grains. The present invention makes it feasible to economically produce such a magnetic recording medium by room temperature film forming technology.

This application is based on Japanese Patent application JP 2002-149408, filed May 23, 2002, the entire content of which is hereby incorporated by reference, the same as if set forth at length.

## Claims

1. A perpendicular magnetic recording medium comprising a substrate and a recording layer, the recording layer comprising a cobalt-containing ferromagnetic metal alloy and a non-magnetic oxide.

2. The perpendicular magnetic recording medium according to claim 1, wherein the substrate is a flexible polymer film.

3. The perpendicular magnetic recording medium according to claim 1, wherein the cobalt-containing ferromagnetic metal alloy comprises: (1) Co; and at least one of (2) at least one of Cr and Pt and (3) at least one of Ni, Fe, B, Si, Ta, Nb, and Ru.

4. The perpendicular magnetic recording medium according to claim 1, wherein the cobalt-containing ferromagnetic metal alloy is at least one of Co-Pt-Cr, Co-Pt-Cr-Ta, Co-Pt-Cr-B, and Co-Ru-Cr.

5. The perpendicular magnetic recording medium according to claim 1, wherein the non-magnetic oxide comprises an oxide of one of Si, Zr, Ta, B, Ti, Al, Cr, Ba, Zn, Na, La, In and Pb.

6. The perpendicular magnetic recording medium according to claim 1, wherein the non-magnetic oxide comprises an oxide of Si.

7. The perpendicular magnetic recording medium according to claim 1, wherein a ratio of the cobalt-containing ferromagnetic metal alloy to the non-magnetic oxide in the recording layer is from 95:5 to 80:20 in terms of atomic ratio.

8. The perpendicular magnetic recording medium according to claim 1, wherein a ratio of the cobalt-containing ferromagnetic metal alloy to the non-magnetic oxide in the recording layer is from 90:10 to 85:15 in terms of atomic ratio.

9. The perpendicular magnetic recording medium according to claim 1, wherein the recording layer has a thickness of 10 to 60 nm.

10. The perpendicular magnetic recording medium according to claim 1, wherein the recording layer has a thickness of 20 to 40 nm.
